(19) 

Europäisches
Patentamt
European
Patent Office
Office européen
des brevets

(11)  **EP 3 717 438 B1**

(12)  **FASCICULE DE BREVET EUROPEEN**

(45) Date de publication et mention
de la délivrance du brevet:
**20.09.2023  Bulletin 2023/38**

(21) Numéro de dépôt: **18808014.7**

(22) Date de dépôt: **29.11.2018**

(51) Classification Internationale des Brevets (IPC):
**C04B 35/26** (2006.01)  **C04B 35/626** (2006.01)
**C04B 35/64** (2006.01)  **H01F 10/24** (2006.01)
**C01G 49/00** (2006.01)  **H01P 1/387** (2006.01)

(52) Classification Coopérative des Brevets (CPC):
**C04B 35/26; C01G 49/0018; C01G 49/0054;
C01G 49/009; C04B 35/2608; C04B 35/2641;
C04B 35/2675; C04B 35/6261; C04B 35/6262;
C04B 35/64; H01F 10/24; H01P 1/387;**
C01P 2002/72; C01P 2006/10; C01P 2006/40;

(Cont.)

(86) Numéro de dépôt international:
**PCT/EP2018/082938**

(87) Numéro de publication internationale:
**WO 2019/106063 (06.06.2019 Gazette 2019/23)**

(54) **MATERIAU FERRITE DE STRUCTURE GRENAT A HAUTE PERMITTIVITE ET A BASSE TEMPERATURE DE FRITTAGE**

GRANATSTRUKTURIERTES FERRITMATERIAL MIT HOHER DURCHLÄSSIGKEIT UND NIEDRIGER SINTERTEMPERATUR

GARNET-STRUCTURED FERRITE MATERIAL WITH HIGH PERMITTIVITY AND LOW SINTERING TEMPERATURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **30.11.2017  FR 1701262**

(43) Date de publication de la demande:
**07.10.2020  Bulletin 2020/41**

(73) Titulaire: **Thales**
**92400 Courbevoie (FR)**

(72) Inventeurs:
• **LEBOURGEOIS, Richard**
**91767 Palaiseau Cedex (FR)**
• **QASSYM, Lilia**
**91767 Palaiseau Cedex (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 0 800 183        WO-A1-2017/089575
FR-A1- 2 824 553        FR-A1- 2 854 981
FR-A1- 2 879 593        FR-A1- 2 965 393
US-A1- 2016 294 032**

• **FUJITA Y ET AL: "LOW TEMPERATURE
SINTERING OF CU-SUBSTITUTED YIG", FUNTAI
OYOBI FUNMATSUYAKIN - JOURNAL OF THE
JAPAN SOCIETY OF POWDER AND POWDER
METALL, FUNTAI FUNMATSU YAKIN KYOKAI,
JP, vol. 49, no. 2, 1 février 2002 (2002-02-01),
pages 95-99, XP008014430, ISSN: 0532-8799**

- **FU Y P ET AL: "Crystallization behavior of Bi"1"."2"5Y"1"."7"5Fe"5O"1"2 prepared by coprecipitation process", CERAMICS INTERNATIONAL, ELSEVIER, AMSTERDAM, NL, vol. 35, no. 8, 1 December 2009 (2009-12-01), pages 3235-3239, XP026640974, ISSN: 0272-8842, DOI: 10.1016/J.CERAMINT.2009.05.038 [retrieved on 2009-07-07]**

(52) Classification Coopérative des Brevets (CPC):
(Cont.)
C04B 2235/3208; C04B 2235/3217;
C04B 2235/3224; C04B 2235/3225;
C04B 2235/3239; C04B 2235/3244;
C04B 2235/3275; C04B 2235/3281;
C04B 2235/3286; C04B 2235/3298;
C04B 2235/3418; C04B 2235/656; C04B 2235/762;
C04B 2235/764

# EP 3 717 438 B1

**Description**

Le domaine de l'invention est celui des matériaux ferrites à faibles pertes, particulièrement adaptés à la réalisation de composants hyperfréquences et notamment de composants passifs magnétiques à faibles pertes fonctionnant à des fréquences de l'ordre de quelques Gigahertz. De tels composants sont particulièrement recherchés actuellement tant pour des applications civiles de télécommunications que pour des applications RADAR fonctionnant typiquement dans des gammes de fréquences comprises entre quelques Gigahertz et quelques dizaines de Gigahertz.

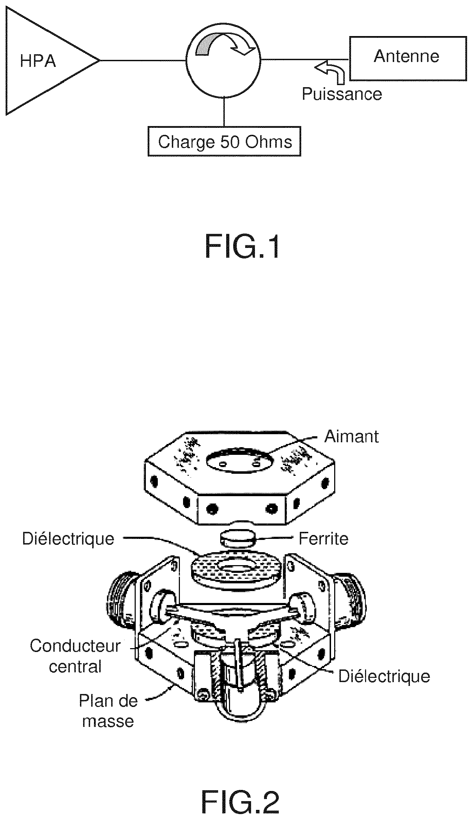

Il peut s'agir de composants passifs magnétiques qui réalisent dans les systèmes de communications hyperfréquences, des fonctions de type filtres, déphaseurs, circulateurs ou isolateurs. Ce sont des composants essentiels car ils permettent d'isoler des réflexions parasites tout en présentant des pertes faibles pour transmettre des puissances importantes, et ce de manière complètement passive. La figure 1 schématise de manière connue un circulateur relié à un amplificateur HPA, à une charge 50 $\Omega$ et à une antenne.

Le fonctionnement des circulateurs hyperfréquences est basé sur l'effet non-réciproque de la propagation d'une onde électromagnétique dans un ferrite magnétiquement saturé. Les circulateurs sont fabriqués de manière conventionnelle en utilisant des technologies d'assemblage coûteuses car le ferrite qui constitue le coeur du composant, un grenat ferrimagnétique, est une céramique frittée à haute température (> 1400°C). Ils sont volumineux et difficiles à intégrer avec d'autres composants employés dans les circuits de microélectronique parce qu'ils ne se présentent généralement pas comme des composants sous forme de puce mais qu'ils sont fabriqués comme des dispositifs à ferrite indépendants. Aussi les sous-ensembles émetteur/récepteur hyperfréquences utilisés dans les radars et les applications de télécommunications ne les intègrent généralement pas, et utilisent d'autres solutions : diodes, MEMS...

Un circulateur est classiquement constitué d'une partie en ferrite, le plus souvent un disque, d'un aimant permanent placé au plus près du ferrite et de pistes métalliques permettant la propagation de l'onde électromagnétique. Dans un circulateur à 3 ports, les pistes métalliques forment un Y pour respecter la symétrie à 120°. La figure 2 schématise un exemple de circulateur triplaque selon l'art connu et comprenant un aimant, un ferrite central, un diélectrique entourant le ferrite central, un conducteur central et un plan de masse.

Un des problèmes actuels à résoudre consiste en la diminution de la taille de ces dispositifs. Dans le cas d'un circulateur, l'élément limitant de cette réduction de taille est le ferrite central, qui fixe la taille et l'épaisseur du dispositif.

Cette taille étant inversement proportionnelle à la racine carrée de la permittivité du ferrite, une augmentation de la permittivité permet donc une diminution de la taille du circulateur.

Le matériau ferrite ciblé dans la présente invention, pouvant être utilisé dans un composant fonctionnant typiquement à des fréquences allant d'environ 1 GHz à 12 GHz, est un grenat ferrimagnétique. Ces ferrites possèdent une organisation cristalline particulière : la structure cristallographique est cubique et trois sites particuliers sont occupés. Les ions yttrium se placent en site dodécaédrique et les ions fer sont en sites octaédrique et tétraédrique. Un exemple de ces matériaux est par exemple le grenat d'yttrium-fer (YIG) de formules chimique $\{Y^{3+}\}$ $[Fe^{3+}]_2$ $(Fe^{3+})_3$ $O_{12}$ (YIG) dans laquelle les symboles $\{\}$, $[\ ]$ et $(\ )$ indiquent respectivement les sites dodécaédriques, octaédriques et tétraédriques.

Les documents WO 2017/089575 A1 et FR 2 965 393 A1, ou bien l'article de Y.P. Fu et K.K. Lew: "Crystallization behavior of Bi1.25Y1.75Fe5O12 prepared by coprecipitation process", Ceram. Int. 35 (2009) 3235-3239, décrivent des matériaux YIG contenant du bismuth.

Le ferrite central, isolant, possède de faibles pertes magnétiques et diélectriques à des fréquences de fonctionnement élevées (quelques gigahertz).

Grâce à un jeu de substitutions, on peut adapter les propriétés de ces matériaux telles que la température de frittage, l'aimantation à saturation et également la permittivité.

C'est pourquoi la présente invention a pour objet un matériau ferrite de structure grenat répondant à la formule chimique suivante :

$$Y_a TR_b Bi_{b'} Fe_c Al_d In_e Ca_f Cu_g Zr_h V_i Co_j Si_k O_{12\pm\gamma}$$

avec TR : une terre rare ou une combinaison de terres rares, TR ne comprenant pas d'Yttrium et

- $-1 \leq \gamma \leq 1$ ;
- $3\ (a+b+b'+c+d+e) + 2\ (f+g+j) + 4\ (h+k) + 5i = 24+\pm2\gamma$
- $0 < a < 2$ ;
- $0 \leq b \leq 1$ ;
- $1 < b' < 3$ ;
- $3 \leq c \leq 5$;
- $0 \leq d \leq 1,5$ ;
- $0 \leq e \leq 0,8$ ;
- $0 < f \leq 1$;

∘ $0 < g \leq 0,05$ ;

∘ $0 \leq h \leq 1$ ;

∘ $0 \leq i \leq 0,8$ ;

∘ $0 \leq j \leq 0,5$ ;

o $0 \leq k \leq 0,5$.

La présence de cuivre permet d'élaborer des matériaux ferrites avec une température de frittage abaissée pouvant typiquement être de l'ordre d'environ 1050°C. Associé au bismuth et au vanadium, le cuivre permet d'abaisser la température de frittage à environ 880°C.

Selon des variantes de l'invention, le paramètre b' répond à la condition suivante : $b' \geq 1,5$ et le paramètre f répond à la condition suivante : $f \geq 0,6$, permettant d'obtenir un matériau ferrite sans phase parasite et ayant une permittivité accrue.

Selon des variantes de l'invention, le paramètre b' répond à la condition suivante : $b' \geq 1,75$ et le paramètre f répond à la condition suivante : $f \geq 0,7$, de manière à favoriser davantage une permittivité accrue.

Selon des variantes, le paramètre b' est tel que : $1 < b' \leq 1,5$, le paramètre h est tel que : $0,3 \leq h \leq 0,4$ et le paramètre f est tel que : $0,3 \leq f \leq 0,4$, permettant d'obtenir un matériau ferrite présentant une permittivité élevée et une forte aimantation.

Selon des variantes de l'invention, le paramètre b' est tel que : $1 < b' \leq 1,5$, le paramètre h est tel que : $0,3 \leq h \leq 0,4$, le paramètre f est tel que : $0,4 \leq f \leq 0,5$ et le paramètre i est tel que : $0,03 \leq i \leq 0,05$, de manière à obtenir un matériau ferrite présentant une permittivité élevée, une forte aimantation et une température de frittage basse. Il peut en effet être particulièrement intéressant d'abaisser encore la température de frittage du matériau dans des applications de type LTCC (correspondant au terme couramment employé en anglais : Low Température Co-Fired Ceramics) afin de réaliser des composants en technologie multicouche.

De manière générale, dans la présente invention, l'utilisation du bismuth permet l'augmentation de la permittivité du ferrite.

L'ajout du calcium peut avantageusement prendre la place de l'yttrium et permettre une stabilisation de la maille lors de l'insertion du bismuth en grande quantité. Le calcium a un rayon ionique intermédiaire entre l'yttrium et le bismuth dont les valeurs sont données ci-après :

$$1,019 \text{ Å} < 1,12 \text{ Å} < 1,17 \text{ Å}$$

Le zirconium peut avantageusement prendre la place du fer afin de contrebalancer le défaut de charge induit par l'utilisation du calcium en site yttrium.

L'utilisation de vanadium en plus du cuivre et du bismuth permet une diminution de la température de frittage aux alentours de 880 °C. L'utilisation du vanadium entraîne également une réduction des largeurs de raie. Le cuivre est lui aussi utilisé afin de diminuer la température de frittage des matériaux. Le but est que ces matériaux à permittivité élevée soient compatibles de la technologie LTCC.

Avec un grenat comme le YIG, l'étape de frittage est réalisée aux alentours de 1500 °C. L'ajout de bismuth et de cuivre dans la structure ainsi que du vanadium permet de diminuer cette température de frittage à environ 880 °C. Cette basse température de frittage permet d'envisager un cofrittage avec des pistes métalliques en or ou en argent. Il est donc possible de réaliser en une seule étape le dispositif souhaité.

D'autres substitutions sont aussi envisageables : avec des terres rares par exemple, pour adapter l'aimantation à saturation.

L'invention a aussi pour objet un composant et par exemple un circulateur comprenant un noyau de matériau ferrite selon l'invention.

Typiquement, les matériaux ferrites de la présente invention permettent d'accéder à des permittivités pouvant varier entre 15 à 35 et à des aimantations à saturation pouvant varier de 0 à 2000 gauss.

Les matériaux ferrites de l'invention permettent de réduire les dimensions du composant les incorporant, en raison de la possibilité d'obtenir des permittivités élevées, tout en supprimant les résonances parasites souvent observées lorsque le composant est destiné à fonctionner sur une large bande de fréquence et ce sans avoir recours à des matériaux absorbants qui augmentent la taille et compliquent la structure donc le coût du composant.

L'invention sera mieux comprise et d'autres avantages apparaîtront à la lecture de la description qui va suivre donnée à titre non limitatif et grâce aux figures annexées parmi lesquelles :

- la figure 1 schématise un circulateur selon l'art connu ;
- la figure 2 schématise un circulateur triplaque selon l'art connu ;
- la figure 3 illustre les diffractogrammes des matériaux B, C, D et E (matériaux étudiés dans le cadre de la présente invention) obtenus après une opération de chamottage à 820 °C ;
- la figure 4 illustre les diffractogrammes des matériaux F, G et H (matériaux étudiés dans le cadre de la présente invention) obtenus après une opération de chamottage à 820 °C ;
- la figure 5 illustre l'évolution de la permittivité relative des matériaux B, C, D et E (matériaux étudiés dans le cadre de la présente invention) frittés à 900 °C, en fonction de la fréquence ;
- la figure 6 illustre l'évolution de la permittivité des matériaux E, F et H (matériaux étudiés dans le cadre de la présente invention) frittés à 900 °C, en fonction de la fréquence.

Le Demandeur a étudié différents matériaux ferrites présentant des formules chimiques différentes afin de mettre en évidence l'influence des substitutions sur certaines propriétés physiques.
Les matériaux ferrites étudiés sont référencés ci-après :

- Ferrite A : $Y_3Fe_5O_{12}$

- Ferrite B : $Y_{2,217}Cu_{0,05}Bi_{0,75}Fe_5O_{12}$

- Ferrite C : $Y_{1,967}Cu_{0,05}Bi_1Fe_5O_{12}$

- Ferrite D : $Y_{1,717}Cu_{0,05}Bi_{1,25}Fe_5O_{12}$

- Ferrite E : $Y_{1,467}Cu_{0,05}Bi_{1,5}Fe_5O_{12}$

- Ferrite F : $Y_{1,067}Cu_{0,05}Bi_{1,5}Ca_{0,4}Fe_{4,65}Zr_{0,3}V_{0,05}O_{12}$

- Ferrite G : $Y_{0,967}Cu_{0,05}Bi_{1,5}Ca_{0,5}Fe_{4,55}Zr_{0,4}V_{0,05}O_{12}$

- Ferrite H : $Y_{0,867}Cu_{0,05}Bi_{1,5}Ca_{0,6}Fe_{4,45}Zr_{0,5}V_{0,05}O_{12}$

De manière générale les ferrites sont fabriquées selon un procédé classique comprenant les étapes suivantes :

- une étape de pesée des matières premières ;
- une étape de mélange et de broyage des matières premières ;
- une étape de traitement thermique appelée chamottage à température élevée typiquement 800 à 850°C ayant pour but de synthétiser la phase grenat sous forme de poudre ;
- une seconde étape de broyage suivie d'une étape de pressage ;
- le frittage à haute température de la poudre chamottée rebroyée ayant pour but de densifier la céramique tout en lui conférant la forme souhaitée.

Typiquement avec un grenat de type $Y_3Fe_5O_{12}$, le frittage est effectué à une température comprise entre 1450°C et 1500°C. En ajoutant des constituants de type calcium et vanadium, on peut abaisser cette température à environ 1350°C.
Les matériaux ferrites ciblés dans la présente invention comportent des éléments tels que le cuivre, le bismuth et le vanadium et présentent une température de frittage nettement abaissée, inférieure à environ 1000°C, pouvant être de l'ordre de 850 à 950°C.
Leur basse température de frittage réduit le coût de fabrication et rend possible le co-frittage avec d'autres types de matériaux comme par exemple certains métaux tels que l'or, l'argent ou des alliages argent-palladium, ou encore des oxydes diélectriques.
Les formations de phase des différents matériaux ferrites ont été étudiées par diffraction des rayons X et sont analysées par catégorie :

- Matériaux ferrites sans calcium :

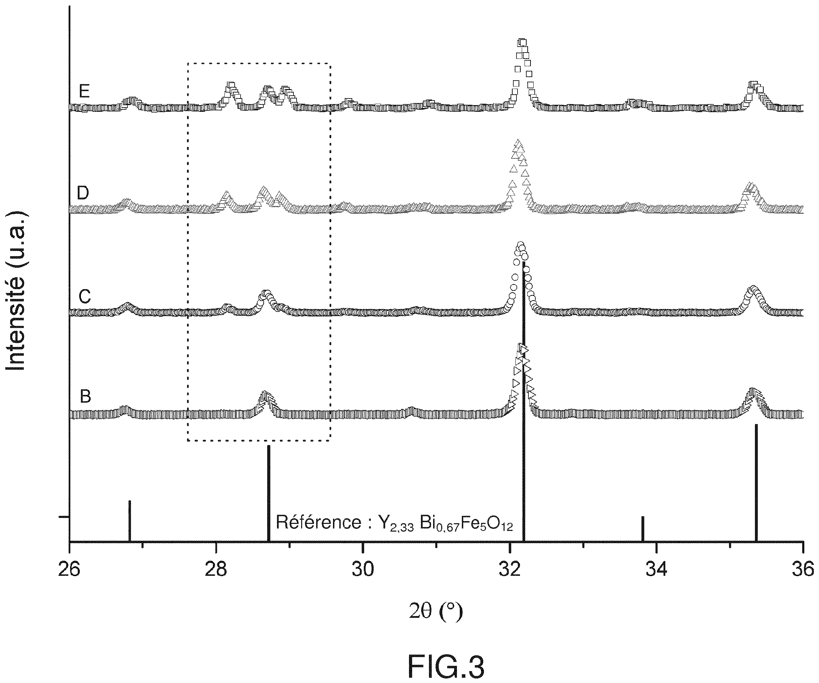

Pour les matériaux B, C, D et E, on remarque que, même si la phase grenat est bien formée, le bismuth n'entre plus dans la maille à partir d'un certain taux et que la présence des impuretés d'oxyde de bismuth fer augmente quand le taux de bismuth augmente comme illustré en figure 3.

- Matériaux ferrites avec du calcium :

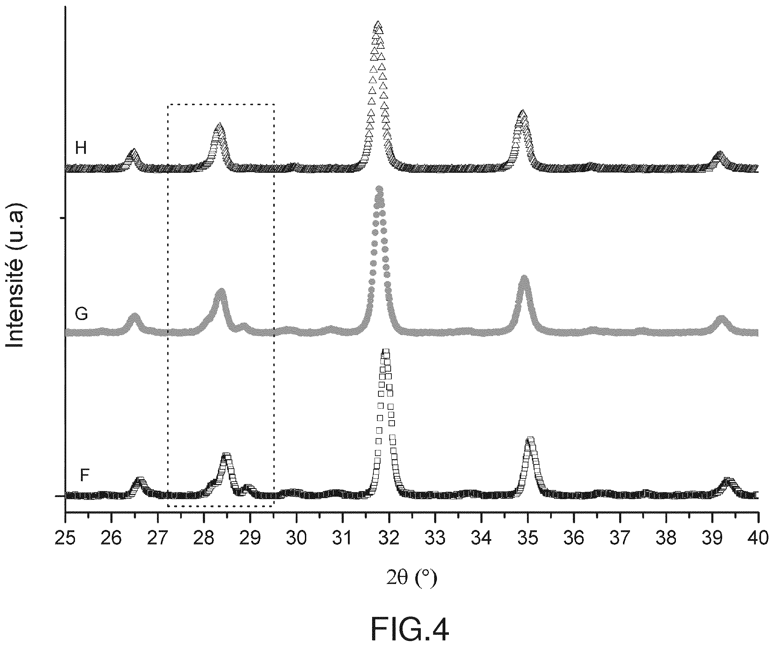

Pour les matériaux F, G et H, l'ajout du calcium permet la diminution de l'impureté d'oxyde bismuth fer. Les résultats DRX exposés en figure 4 en apportent la preuve.

En effet, on peut voir sur le diffractogramme, la disparition progressive des impuretés quand le taux de calcium augmente. On observe aussi un décalage des pics vers les petits angles qui confirme l'insertion du calcium et du bismuth dans la maille à la place de l'yttrium.

L'ajout de calcium dans la maille, ion de taille intermédiaire, permet ainsi de faciliter l'insertion du bismuth qui a un rayon ionique assez différent de celui de l'yttrium.

Les masses volumiques ont également été mesurées (matériau fritté à 950 °C) :

| Matériau | Taux de calcium / formule | Taux de bismuth / formule | $\rho$ (g.cm$^{-3}$) | % densification |
|---|---|---|---|---|
| B | 0 | 0,75 | 5,37 | 93,7 |
| C | 0 | 1 | 5,77 | 97,6 |
| D | 0 | 1,25 | 5,97 | 98,0 |
| E | 0 | 1,5 | 6,1 | 97,3 |
| F | 0,4 | 1,5 | 5,96 | 96,1 |
| G | 0,5 | 1,5 | 5,94 | 95,8 |
| H | 0,6 | 1,5 | 5,97 | 96,3 |

En l'absence de calcium, une augmentation de la masse volumique est tout d'abord constatée. En effet, l'utilisation de bismuth entraîne une amélioration de la densité à basse température de frittage. En revanche, on remarque que lorsque le taux de bismuth atteint 1,5, la masse volumique diminue à nouveau. Ceci peut être dû à la présence de la phase parasite mise en évidence grâce à l'analyse des matériaux par diffraction des rayons X. L'ajout de calcium à la structure mène ensuite à une stabilisation de la masse aux alentours de 96 %. Cette stabilisation peut être due à la compétition entre 2 phénomènes : l'utilisation de calcium permet de diminuer la phase parasite mais l'utilisation de zirconium perturbe la densification à 950 °C.

Le Demandeur a également réalisé des mesures de permittivités sur des pastilles de matériau ferrite.

- Matériaux ferrites sans calcium :

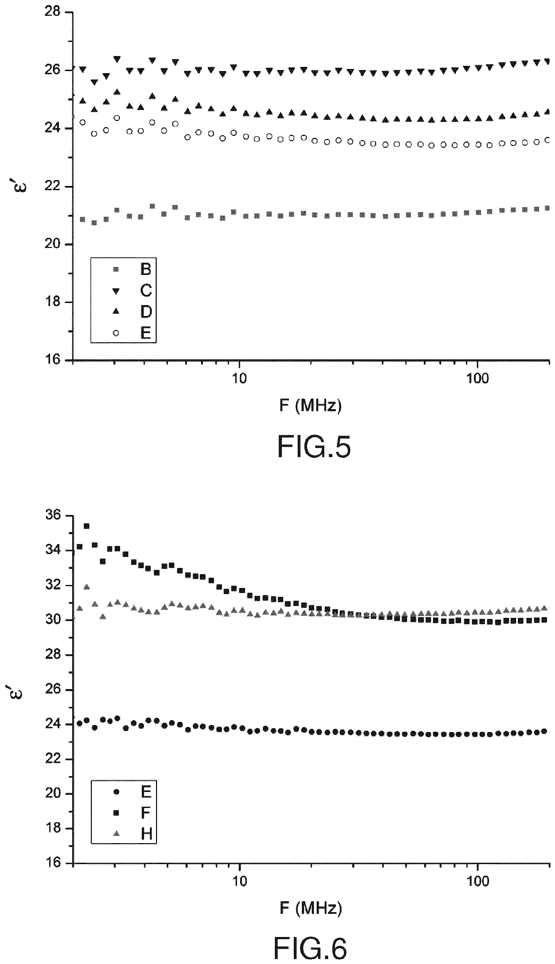

Les permittivités des matériaux à fort taux en bismuth ont été mesurées. Les résultats obtenus entre 1 MHz et 200 MHz sont illustrés en figure 5.

On observe que l'utilisation de bismuth en substituant à l'yttrium permet une nette augmentation de la permittivité relative $\varepsilon'$ (d'environ 21 à 26). En revanche l'apparition de phase parasite entraine une diminution de la permittivité accompagnée d'une augmentation des pertes diélectriques (le Tableau 1 indique la mesure des pertes diélectriques à 50 MHz).

**Tableau 1**

| Matériau | $\tan\delta_\varepsilon$ (x10$^{-3}$) |
|---|---|
| B | 2,8 |
| C | 3 |
| D | 7,9 |
| E | 8,3 |

- Matériaux ferrites avec calcium :

Les permittivités des matériaux substitués avec du bismuth et du calcium ont aussi été mesurées. Les mesures de permittivité ont montré une nette augmentation de la partie réelle $\varepsilon'$: on obtient des valeurs de plus de 30, comme illustré en figure 6.

On observe une amélioration des résultats lorsque la phase parasite diminue. La permittivité augmente et

6

devient plus stable. La tangente des pertes diélectriques mesurées est de l'ordre de 2 à 3.10$^{-3}$, valeur acceptable pour les applications visées.

L'augmentation de la partie réelle de la permittivité $\varepsilon$' est plus importante que précédemment sans calcium : on atteint des permittivités de plus de 30 (rappel : pour le matériau A sans bismuth : $\varepsilon$'=15). Grâce à ces matériaux à forte permittivité, il devient possible de diminuer les tailles des dispositifs.

Le Demandeur a également réalisé des mesures d'aimantation. L'ensemble des mesures sont répertoriées dans le Tableau 2 ci-après :

**Tableau 2**

| Matériau | Aimantation à saturation (mT) |
|----------|-------------------------------|
| A | 180 |
| B | 178 |
| C | 180 |
| D | 151 |
| E | 135 |
| F | 185 |
| G | 196 |
| H | 175 |

Quand le taux de zirconium augmente, et jusqu'à un taux d'environ 0,45, l'aimantation à saturation $M_s$ du matériau augmente (« Variation of the magnetic material parameters and lattice constants of polycrystalline yttrium iron garnet by incorporation of nonmagnetic ions », G. Winkler, P. Hanser et P. Holst, Phillips Res. Repts, 1972).

Au-delà d'un certain taux, la valeur de l'aimantation à saturation $M_s$ a tendance à diminuer. On observe cette diminution entre les matériaux G et H. En revanche, on observe une augmentation de l'aimantation lorsque l'on passe d'un taux de 0,4 à 0,5 : ce comportement, peut être expliqué par la présence d'une phase parasite dans le matériau F (voir résultats DRX).

Les largeurs de raies de résonance gyromagnétique $\Delta$H des matériaux étudiés sont répertoriées dans le tableau ci-dessous :

| Matériau | $\Delta$H (Oe) |
|----------|----------------|
| A | 75 |
| B | 290 |
| C | 345 |
| D | 480 |
| E | 500 |
| F | 415 |
| G | 390 |
| H | 320 |

L'introduction du bismuth dans la maille entraîne une augmentation des pertes magnétiques. Cette augmentation est liée à la déstabilisation de la maille due au remplacement de l'yttrium par le bismuth de rayon ionique plus élevé. A cet effet de déstabilisation s'ajoute l'apparition d'une phase parasite. Quand du calcium est introduit dans la maille, les pertes diminuent : la disparition progressive de la phase parasite quand le taux de calcium augmente permet de minimiser les pertes magnétiques. De plus, les matériaux F, G et H contiennent du zirconium : dans la littérature, on trouve que le zirconium permet de diminuer la largeur de raie de résonance pour les grenats conventionnels frittés à haute température (même référence que précédemment).

Le Demandeur a ainsi mis en évidence les intérêts des formulations de matériaux ferrite de la présente invention rappelés ci-après :

L'utilisation de bismuth comme substituant à l'yttrium permet une forte augmentation de la permittivité. Mais l'insertion du bismuth dans la maille perturbe la formation de la maille et l'ion $Bi^{3+}$ n'entre plus dans la structure à partir d'un taux situé entre 0,75 et 1. L'utilisation du calcium, de rayon ionique intermédiaire entre l'yttrium et le bismuth, permet la stabilisation de la maille lors de l'ajout, à fort taux du bismuth.

Ces effets conjugués avec ceux du cuivre et du vanadium permettent d'obtenir des ferrites de structure grenat présentant des permittivités élevées et compatibles avec la technologie LTCC.

Les valeurs de permittivité obtenues, de plus de 30, permettent des réductions de taille des dispositifs incorporant lesdits matériaux ferrites.

## Revendications

1. Matériau ferrite de structure grenat répondant à la formule chimique suivante :

$$Y_a TR_b Bi_{b'} Fe_c Al_d In_e Ca_f Cu_g Zr_h V_i Co_j Si_k O_{12 \pm \gamma}$$

avec TR : une terre rare ou une combinaison de terres rares, TR ne comprenant pas d'Yttrium et

  ○ $-1 \leq \gamma \leq 1$ ;
  ○ $3 (a+b+b'+c+d+e) + 2 (f+g+j) + 4 (h+k) + 5i = 24 + \pm 2\gamma$;
  ○ $0 < a < 2$
  ○ $0 \leq b \leq 1$ ;
  ○ $1 < b' < 3$ ;
  ○ $3 \leq c \leq 5$;
  ○ $0 \leq d \leq 1,5$ ;
  ○ $0 \leq e \leq 0,8$ ;
  ○ $0 < f \leq 1$;
  ○ $0 < g \leq 0,05$ ;
  ○ $0 \leq h \leq 1$ ;
  ○ $0 \leq i \leq 0,8$ ;
  ○ $0 \leq j \leq 0,5$ ;
  o $0 \leq k \leq 0,5$.

2. Matériau ferrite selon la revendication 1, dans lequel $b' \geq 1,5$ et $f > 0,6$.

3. Matériau ferrite selon la revendication 1, dans lequel $b' > 1,75$ et $f \geq 0,7$.

4. Ferrite selon la revendication 1, dans lequel $1 < b' \leq 1,5$, $0,3 \leq h \leq 0,4$, $0,3 \leq f \leq 0,4$.

5. Ferrite selon la revendication 1 dans lequel $1 < b' \leq 1,5$, $0,3 \leq h \leq 0,4$, $0,4 \leq f \leq 0,5$ et $0,03 \leq i \leq 0,05$.

6. Composant comprenant un noyau de matériau ferrite selon l'une des revendications 1 à 5.

7. Composant selon la revendication 6, **caractérisé en ce qu'**il est un circulateur.

## Patentansprüche

1. Ferritmaterial mit Granatstruktur, das der folgenden chemischen Formel genügt:

$$Y_a TR_b Bi_{b'} Fe_c Al_d In_e Ca_f Cu_g Zr_h V_i Co_j Si_k O_{12 \pm \gamma}$$

wobei TR: ein Seltenerdmetall oder eine Kombination von Seltenerdmetallen ist, wobei TR kein Yttrium umfasst und

  ○ $-1 \leq \gamma \leq 1$;
  ○ $3 (a+b+b'+c+d+e) + 2 (f+g+j) + 4 (h+k) + 5i = 24 + \pm 2\gamma$:
  o $0 < a < 2$;
  ○ $0 \leq b \leq 1$;
  ○ $1 < b' < 3$;

- $3 \leq c \leq 5$;
- $0 \leq d \leq 1,5$;
- $0 \leq e \leq 0,8$;
- $0 < f \leq 1$;
- $0 < g \leq 0,05$;
- $0 \leq h \leq 1$;
- $0 \leq i \leq 0,8$;
- $0 \leq j \leq 0,5$;
- $0 \leq k \leq 0,5$.

2. Ferritmaterial nach Anspruch 1, wobei $b' \geq 1,5$ und $f \geq 0,6$.

3. Ferritmaterial nach Anspruch 1, wobei $b' \geq 1,75$ und $f \geq 0,7$.

4. Ferrit nach Anspruch 1, wobei $1 < b' \leq 1,5$, $0,3 \leq h \leq 0,4$, $0,3 \leq f \leq 0,4$.

5. Ferrit nach Anspruch 1, wobei $1 < b' \leq 1,5$, $0,3 \leq h \leq 0,4$, $0,4 \leq f \leq 0,5$ und $0,03 \leq i \leq 0,05$.

6. Komponente umfassend einen Kern aus Ferritmaterial nach einem der Ansprüche 1 bis 5.

7. Komponente nach Anspruch 6, **dadurch gekennzeichnet, dass** sie ein Zirkulator ist.

**Claims**

1. A ferrite material having a garnet structure and satisfying the following chemical formula:

$$Y_a TR_b Bi_{b'} Fe_c Al_d In_e Ca_f Cu_g Zr_h V_i Co_j Si_k O_{12 \pm \gamma}$$

wherein TR: is a rare earth metal or a combination of rare earth metals, wherein TR does not comprise Yttrium and

- $-1 \leq \gamma \leq 1$;
- $3 (a+b+b'+c+d+e) + 2 (f+g+j) + 4 (h+k) + 5i = 24 + \pm 2\gamma$;
- $0 < a < 2$;
- $0 \leq b \leq 1$;
- $1 < b' < 3$;
- $3 \leq c \leq 5$;
- $0 \leq d \leq 1,5$;
- $0 \leq e \leq 0,8$;
- $0 < f \leq 1$;
- $0 < g \leq 0,05$;
- $0 \leq h \leq 1$;
- $0 \leq i \leq 0,8$;
- $0 \leq j \leq 0,5$;
- $0 \leq k \leq 0,5$.

2. The ferrite material according to claim 1, wherein $b' \geq 1,5$ et $f \geq 0,6$.

3. The ferrite material according to claim 1, wherein $b' \geq 1,75$ et $f \geq 0,7$.

4. The ferrite according to claim 1, wherein $1 < b' \leq 1,5$, $0,3 \leq h \leq 0,4$, $0,3 \leq f \leq 0,4$.

5. The ferrite according to claim 1, wherein $1 < b' \leq 1,5$, $0,3 \leq h \leq 0,4$, $0,4 \leq f \leq 0,5$ and $0,03 \leq i \leq 0,05$.

6. A component comprising a core of ferrite material according to any one of claims 1 to 5.

7. The component according to claim 6, **characterised in that** it is a circulator.

FIG.1

FIG.2

**FIG.3**

FIG.4

FIG.5

FIG.6

## RÉFÉRENCES CITÉES DANS LA DESCRIPTION

**Documents brevets cités dans la description**

- WO 2017089575 A1

- FR 2965393 A1

**Littérature non-brevet citée dans la description**

- **K.K. LEW.** Crystallization behavior of $Bi_{1.25}Y_{1.75}Fe_5O_{12}$ prepared by coprecipitation process. *Ceram. Int.,* 2009, vol. 35, 3235-3239

- **G. WINKLER ; P. HANSER ; P. HOLST.** Variation of the magnetic material parameters and lattice constants of polycrystalline yttrium iron garnet by incorporation of nonmagnetic ions. *Phillips Res. Repts,* 1972